# EUROPÄISCHE PATENTSCHRIFT

(11) **EP 3 206 819 B1**
(45) Veröffentlichungstag und Bekanntmachung des Hinweises auf die Patenterteilung: **13.05.2020**
(21) Anmeldenummer: 15781377.5
(22) Anmeldetag: 19.10.2015
(51) Int. Cl.: B23B 31/02, B23B 31/117

(54) **SCHWINGUNGSGEDÄMPFTER HOCHGESCHWINDIGKEITSWERKZEUGHALTER.**
HIGH-SPEED TOOL HOLDER
PORTE-OUTIL POUR OUTIL À VITESSE RAPIDE

(30) Priorität: 17.10.2014 EP 14189407
(43) Veröffentlichungstag der Anmeldung: 23.08.2017
(73) Patentinhaber: Straumann Holding AG, 4002 Basel (CH)
(72) Erfinder: KURTH, Dieter, CH-4002 Basel (CH)
(74) Vertreter: Modiano, Gabriella Diana
(86) Internationale Anmeldenummer: PCT/EP2015/074161
(87) Internationale Veröffentlichungsnummer: WO 2016/059252

(56) Entgegenhaltungen:
- EP-A1- 2 399 698
- EP-A2- 1 273 396
- WO-A1-02/05992
- DE-U1-202005 014 350
- US-A1- 2012 207 560

## Beschreibung

Die vorliegende Erfindung betrifft einen Hochgeschwindigkeitswerkzeughalter gemäß dem Oberbegriff des Anspruchs 1, der zur Aufnahme eines Werkzeugs und zum Einspannen in eine Maschine dient und der durch eine besondere Formgebung besonders schwingungsgedämpft ausgebildet ist.

Herkömmliche Hochgeschwindigkeitswerkzeughalter zur Aufnahme des Werkzeugs und zum Einspannen in die Maschine, wie beispielsweise in eine Dreh-, eine Fräs- oder eine Bohrmaschine sind von einem ersten Ende, an dem das Werkzeug eingespannt ist, bis zu einem zweiten Ende, das in die Maschine eingespannt ist, im Durchmesser zunehmend konisch ausgebildet. Dadurch soll am vorderen ersten Ende möglichst wenig Masse angeordnet sein, wo später eine Materialbearbeitung durch das Werkzeug stattfindet. Zugleich wird durch die konische und im Durchmesser zunehmende Form zum hinteren Bereich hin einem höheren Biegemoment als im vorderen Bereich Rechnung getragen und die notwendige Steifigkeit entsprechend erhöht. Es sind auch Hochgeschwindigkeitswerkzeughalter bekannt, die aus verschiedenen Teilen zusammengesetzt oder zusammengeschweißt sind, um eine bestimmte Form oder Funktionalität zu erreichen.

Bei hohen Drehzahlen und bei der spanabhebenden Bearbeitung treten jedoch im Hochgeschwindigkeitswerkzeughalter Schwingungen quer zu dessen Längsachse auf, ähnlich einer Stimmgabel, die ein Werkzeug, wie beispielsweise einen Fräser, sich sehr schnell abnutzen lassen. Der Hochgeschwindigkeitswerkzeughalter ist dabei bevorzugt ein Schrumpffutter, ein Werkzeughalter mit Schraubverbinder, ein Hybridverbinder oder eine Spannhülse. Um die Schwingungen zu begrenzen, werden die Hochgeschwindigkeitswerkzeughalter bevorzugt möglichst kurz ausgebildet, wobei aber auch nur entsprechend begrenzte Kontouren und vor allen Innenkontouren gefräst werden können, damit ein Futter für den Hochgeschwindigkeitswerkzeughalter nicht am Werkstück oder Werkstückhalter anschlägt.

Beispielsweise offenbart DE 20 2005 014 350 U1 einen Werkzeughalter zur Schrumpfbefestigung eines Werkzeugs gemäß dem Oberbegriff des Anspruchs 1. Jedoch sieht der Werkzeughalter keine Optimierung des Dämpfungsverhaltens von seitlichen Schwingen vor.

Das Dokument EP 1 273 396 A2 offenbart ein Werkzeug mit Verdickungen entlang des Werkzeugschafts, wobei die Verdickungen ein Schwingungsverhalten in Längsrichtung des insbesondere eines Schlagbohrwerkzeugs begünstigen. Hohe Umdrehungsgeschwindigkeiten von 20.000 U/min bis 100.000 U/min und mehr, wie bei einem Hochgeschwindigkeitswerkzeughalter, werden bei dem Werkzeug, das ein Meißel oder Schlagbohrer ist, nicht berücksichtigt. Das Werkzeug ist lediglich auf schlagende Längskräfte in Richtung des Schafts hin optimiert.

Das Dokument US 2012 0207 560 A1 offenbart einen mehrteiligen Werkzeughalter, der in einem mittleren Schaftteil ein in das Werkzeug annular oder segmentweise eingebrachtes Dämpfungsmittel aufweist, das seitliche Schwingungen abdämpft und für einen ruhigeren Lauf des Werkzeugs sorgt. Dabei ist das Einbringen des Dämpfungsmittels kompliziert und auch schwierig auszuwuchten, da schon kleine radiale Abweichungen des Dämpfungsmittels auf einer Seite zu großen Unwuchten und zu seitlichen Schwingungen führen, die das Werkzeug und den Werkzeughalten schnell beschädigen und unbrauchbar werden lassen.

Um die Nachteile aus dem Stand der Technik zu beseitigen, besteht eine Aufgabe der Erfindung darin, einen Hochgeschwindigkeitswerkzeughalter mit einer möglichst guten Schwingungsdämpfung von Querschwingungen entlang seiner Längsachse und insbesondere im vorderen Teil des mit einem Hochgeschwindigkeitswerkzeughalters verbundenen Werkzeugs bereitzustellen. Zudem soll der Hochgeschwindigkeitswerkzeughalter auch für größere Längen verwendet werden können, als es mit den Werkzeughaltern aus dem Stand der Technik möglich ist.

Eine weitere Aufgabe ist es dabei selbstverständlich auch, den Hochgeschwindigkeitswerkzeughalter so auszubilden, dass er leicht herstellbar ist, ohne dass er beispielsweise schon bei der Herstellung in einem ersten Schritt Unwuchten aufweist, die dann in einem nachfolgenden Schritt wieder entfernt oder kompensiert werden müssten. Natürlicherweise soll der Hochgeschwindigkeitswerkzeughalter auch möglichst robust ausgebildet sein, indem er in Betrieb ausgewuchtet bleibt und sich nicht verstellt, wie beispielsweise durch ein Verstellen von Schrauben oder ähnlichen Verstellmitteln. Dabei soll ein Hochgeschwindigkeitswerkzeughalter geschaffen werden, der auch ohne mehrteilige nachträglich angesetzte Komponenten auskommt und der keine außen liegende Elemente in Form von Wuchtkörpern oder Schrauben zur Rotationsunwuchtverminderung ausweist.

Die vorstehenden Aufgaben sowie weitere der Beschreibung zu entnehmende Aufgaben werden von einem Hochgeschwindigkeitswerkzeughalter gemäß den Merkmalen des unabhängigen Anspruchs 1 gelöst. Weitere vorteilhafte Ausführungsformen der Erfindung sind in den abhängigen Ansprüchen und in der Beschreibung angegeben.

Erfindungsgemäß wird ein Hochgeschwindigkeitswerkzeughalter gemäß dem Anspruch 1 zur Aufnahme eines Werkzeugs an seinem ersten Ende und zum Einspannen in eine Maschine an seinem zweiten Ende bereitgestellt, wobei die Enden an den entgegengesetzten Seiten der Längsachse des Hochgeschwindigkeitswerkzeughalters angeordnet sind, wobei der Hochgeschwindigkeitswerkzeughalter folgendes umfasst:
einen Werkzeugschaft, der entlang der Längsachse zentrisch ausgebildet ist und das erste Ende des Hochgeschwindigkeitswerkzeughalters bestimmt, wobei am ersten Ende eine Werkzeugeinführungsöffnung mit einer ersten Bohrung zur Aufnahme des Werkzeugs ausgebildet ist, und
ein ebenfalls entlang der Längsachse zentrisch ausgebildetes Maschinenspannteil, das mit dem Werkzeugschaft an einem dem ersten Ende gegenüberliegenden Ende integral verbunden ist und eine Schnittstelle zum Einspannen in die Maschine darstellt, wobei
der Werkzeugschaft im Wesentlichen kreiskegelstumpfförmig ausgebildet ist, wobei ein erster Durchmesser am ersten Ende mit der Werkzeugeinführungsöffnung kleiner ist als ein fünfter Durchmesser am zweiten Ende am Maschinenspannteil und
ein Teilbereich des im Wesentlichen kreiskegelstumpfförmigen Werkzeugschafts zwischen Werkzeugeinführungsöffnung und Maschinenspannteil eine nach außen gewölbte, bevorzugt kugelförmige, Form aufweist.

Bevorzugt ist der Werkzeugschaft entlang der Längsachse in einen ersten, zweiten und dritten Abschnitt untergliedert ist, die der Reihe nach integral ineinander übergehen, wobei
der erste Abschnitt am ersten Ende mit der Werkzeugeinführungsöffnung angeordnet ist und in Richtung zum zweiten Abschnitt von einem ersten Durchmesser zu einem zweiten Durchmesser im Wesentlichen kreiskegelstumpfförmig zunehmend ausgebildet ist, wobei eine im Wesentlichen kegelstumpfförmige Ausbildung eine ist, worin die Kegelstumpfform optional lokale Verdickungen ausweisen kann;
der zweite Abschnitt, der dem Teilbereich mit der nach außen gewölbten Form entspricht, an einer Stelle, die dem ersten Abschnitt angrenzt, den zweiten Durchmesser hat und an einer Stelle, die dem dritten Abschnitt angrenzt, einen vierten Durchmesser hat, der größer als oder gleich wie der zweite Durchmesser ist, wobei der zweite Abschnitt über dessen Länge die in Bezug auf die Längsachse nach außen gewölbte und bevorzugt kugelige Form hat; und
der dritte Abschnitt, an einer Stelle, die dem zweiten Abschnitt angrenzt, den vierten Durchmesser hat und weiter bis zum fünften Durchmesser konisch zunimmt.

Zur Klarheit sei angemerkt, dass, im Rahmen dieser Erfindung, die Begriffe konisch oder kegelstumpfförmig gleichbedeutend sind mit kreiskegelstumpfförmig.

Erfindungsgemäß weist der Teilbereich mit der nach außen gewölbten Form eine bevorzugt kugelige oder ovale Form entlang der Längsachse auf. Dadurch wird bewirkt, dass sich Schwingungen, die durch ein Fräsen und/oder von außen stoßweise anregende Kräfte entstehen, stark gedämpft werden und sich nicht entlang und quer zur Längsachse ausbreiten können. Eine Anregung von Schwingungen durch beispielsweise zentrifugale Kräfte, die durch schwingungsmäßig leicht exzentrische Auslenkungen des ersten Endes des Werkzeugschafts zustande kommen, können sich durch die vorliegende Geometrie des Teilbereichs mit der nach außen gewölbten Form nicht oder nur sehr stark vermindert ausbreiten oder aufschaukeln.

Durch eine bevorzugte kugelige oder ovale Querschnittgeometrie des Teilbereichs mit der nach außen gewölbten Form mit einer entsprechenden zu- und abnehmenden Quersteifigkeit entlang der Längsachse werden Schwingungen quer zur Längsachse sehr gut gedämpft. Auch eine erhöhte Massenträgheit der Verdickung des zweiten Abschnitts trägt positiv zu der Schwingungsdämpfung bei. Besonders vorteilhaft kann aber auch eine Reduzierung der Massenträgheit des Teilbereichs mit der nach außen gewölbten Form sein, indem dieser durch die nach außen gewölbte Kontur mit der stark erhöhten Steifigkeit innen ausgehöhlt werden kann.

Bevorzugt sind im Innern des Teilbereichs mit der nach außen gewölbten Form und/oder im dritten Abschnitt Bohrungen oder sonstige Hohlräume vorgesehen, um darin Dämpfungselemente wie beispielsweise korpuskuläre Füllstoffe und/oder viskose Füllstoffe und/oder Schäume vorzusehen. Insbesondere auch eine Kombination der korpuskulären und der viskosen Füllstoffe sind vorteilhaft für die Schwingungsdämpfung des Hochgeschwindigkeitswerkzeughalters.

Die in den Ansprüchen und in der detaillierten Beschreibung genannten Abmaße und Formgeometrien haben sich als besonders vorteilhaft für eine Schwingungsdämpfung herausgestellt.

Vorteilhafterweise wird die Werkzeugeinführöffnung am ersten Ende ohne Vorweite ausgeführt, so dass sie nach Einführung des Werkzeugs besonders eng am Werkzeug anliegt und dadurch einer initialen Schwingungserregung entgegenwirkt.

Bevorzugt wird der erste Abschnitt an der Werkzeugeinführöffnung mit einer zusätzlichen Verdickung ausgeführt, um nahe dem Eintritt des Werkzeugs in den Hochgeschwindigkeitswerkzeughalter eine besonders gute Steifigkeit und einen entsprechenden Halt des Werkzeugs darin zu erzeugen.

Durch Hochgeschwindigkeitswerkzeughalter mit einer größeren Länge wird der Bearbeitungsspielraum des Werkstückes vergrößert. So können zum Beispiel erfindungsgemässe Hochgeschwindigkeitswerkzeughalter eine Gesamtlänge von bis zu 200mm, beispielsweise von 80 bis 180mm, bevorzugt von 100 bis 140mm, aufweisen.

Bevorzugt ist der Werkzeugschaft für Werkzeuge mit einem Spanndurchmesser in einem Bereich von 1 - 10 mm ausgebildet. Dabei kann der Werkzeugschaft aber ebenso für Werkzeuge mit einem Spanndurchmesser im Bereich von 1 - 60 mm ausgebildet sein, oder für kleinere Durchmesser von beispielsweise 0,4mm oder für größere Durchmesser, die 60mm überschreiten.

Vorteilhaft ist auch, im Hochgeschwindigkeitswerkzeughalter mindestens einen intern verlaufenden Durchflusskanal, der in Längsrichtung entlang dem Schaft verläuft, vorzusehen. Dabei können durch den Durchflusskanal Luft, ein Gas, eine Flüssigkeit oder ein Gemisch daraus hindurch geleitet oder gepumpt werden, um beispielsweise eine Kühlung zu erzeugen. Die Flüssigkeit ist dabei bevorzugt eine Kühlflüssigkeit. Der Durchflusskanal kann eine entsprechende Innenkontur zur Verwirbelung des Durchflussmediums, welches bevorzugt ein Gas oder eine Flüssigkeit oder ein Gas-Flüssigkeitsgemisch ist, aufweisen. Bevorzugt sind mindestens zwei Durchflusskanäle um die erste Bohrung herum angeordnet. Bevorzugt überlappen sich dabei die mindestens zwei Durchflusskanäle mit der ersten Bohrung, so dass das Werkzeug dadurch am Schaft direkt von dem Durchflussmedium umspült wird. Indem sich die mindestens zwei Durchflusskanäle mit der ersten Bohrung bevorzugt überlappen, entstehen Abstützstege gegen das Werkzeug, die das Werkzeug halten. Bevorzugt sind die mindestens zwei Durchflusskanäle am ersten Ende vorne nach außen hin offen.

In den Durchflusskanälen oder beim Austritt aus diesen, durch die Rotation des Werkzeughalters bedingt, können strömungsbedingt Verwirbelungen des Durchflussmediums auftreten. Die Durchflusskanäle können bei unterschiedlichen Materialien, die vom Werkzeug bearbeitet werden sollen, mehrere Funktionen haben. Eine Funktion ist die Kühlung, beispielsweise bei Werkstücken aus Metall. Eine andere Funktion ist ein Wegblasen von abgetragenen Partikeln vom zu bearbeitenden Werkstück durch das herausgepresste Durchflussmedium, das vorne an der Werkzeugeinführungsöffnung, an der die Durchflusskanäle nach außen offen sind, austritt. Insbesondere ist ein solches Wegblasen bei einer Bearbeitung von Zirkonoxiden vorteilhaft, bei der zugleich auch eine Kühlung erfolgen kann; bevorzugt ist das Durchflussmedium hierbei Luft mit einer Luftfeuchte von 10-20%. Durch das Wegblasen und ein gleichzeitiges Kühlen der abgetragenen Partikel, wie beispielsweise von Zirkonoxidpartikeln, kann wesentlich schneller gefräst werden. Auch werden dadurch beispielsweise Risse oder Randbeschädigungen am Werkstück vermieden. Ein weiterer positiver Effekt durch das aus den Durchflusskanälen ausströmende Durchflussmedium ist, dass die abgetragenen Bestandteile oder Partikel vom Werkstück und/oder vom Werkzeug weggeblasen werden. Dadurch wird eine Schneidekante von solchen abgetragenen Partikeln befreit und eine längere Standzeit oder Lebensdauer des Werkzeugs bewirkt. Das Durchflussmedium kann beispielsweise auch angefeuchtete Luft oder destilliertes Wasser sein.

Bevorzugt liegen für das Werkzeug durch die Durchflusskanäle um die erste Bohrung drei Abstützstege als Dreipunktauflage vor, wobei eine verbesserte Rundlaufeigenschaft des Werkzeuges bewirkt wird.

Eine bevorzugte Ausführungsform gemäß der vorliegenden Erfindung ist in nachfolgenden Zeichnungen und in einer detaillierten Beschreibung dargestellt, soll aber die vorliegende Erfindung nicht darauf begrenzen.

Es zeigen
- Fig. 1A: in einer Seitenansicht ein Schrumpffutter als einen Hochgeschwindigkeitswerkzeughalter, das einen Werkzeugschaft mit einem ersten Abschnitt, in den ein Werkzeug einführbar ist, mit einem zweiten Abschnitt, der eine Verdickung aufweist, und mit einem dritten Abschnitt und das integral mit dem dritten Abschnitt verbunden ein Maschinenspannteil umfasst, wobei der erste Abschnitt an einer Werkzeugeinführöffnung eine weitere Verdickung aufweist;
- Fig. 1B: das Schrumpffutter der Fig. 1A in der Seitenansicht als Schnittbild entlang der Mittellängsachse, wobei der erste Abschnitt eine erste Bohrung, der zweite Abschnitt eine zweite Bohrung und der dritte Abschnitt eine dritte Bohrung aufweist;
- Fig. 2: das Schrumpffutter gemäß Fig. 1A und 1B in einer frontalen Draufsicht auf eine äußere Stirnseite mit der Werkzeugeinführöffnung;
- Fig. 3: das Schrumpffutter gemäß Fig. 1A, 1B und 2 als perspektivische Darstellung;
- Fig. 4: das Schrumpffutter als Schnittbild gemäß Fig. 1A und 1B, wobei die zweite und die dritte Bohrung durch Trennelemente abgedichtet sind und im Innern Füllmaterial enthalten;
- Fig. 5: ein anderes Schrumpffutter als Schnittbild ähnlich dem gemäß Fig. 1A und B, wobei der erste Abschnitt an der Werkzeugeinführöffnung in dieser Ausbildungsform keine weitere Verdickung aufweist;
- Fig. 6: eine weitere Ausbildungsform des Schrumpffutter gemäß einem der vorstehenden Figuren, wobei das Schrumpffutter zusätzlich Durchflusskanäle für ein gasförmiges oder flüssiges oder daraus gemischtes Medium aufweist;
- Fig. 7a: ein Messdiagramm eines Schrumpffutters gemäß der vorliegenden Erfindung; und
- Fig. 7b: ein Messdiagramm eines nicht erfindungsgemässen Schrumpffutters gleicher Abmessungen wie Fig. 7a, jedoch ohne nach aussen gewölbte Form im Abschnitt 2.

### Detaillierte Beschreibung der Erfindung

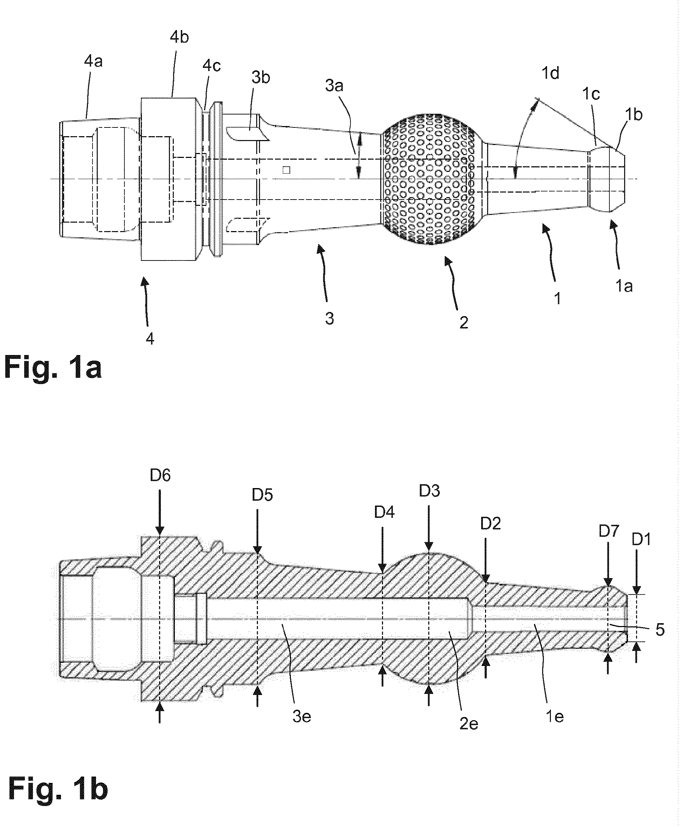

In Fig. 1A, 1B, Fig. 2 und Fig. 3 ist ein bevorzugter Hochgeschwindigkeitswerkzeughalter in verschiedenen Ansichten abgebildet, der als ein Schrumpffutter ausgebildet ist. Das Schrumpffutter besitzt an seinem ersten Ende zur Aufnahme eines Werkzeugs eine Werkzeugeinführöffnung 5 und an seinem entlang der Längsachse gegenüberliegenden zweiten Ende ein Maschinenspannteil 4 zum Einspannen in eine Maschine. Das Schrumpffutter umfasst dabei im Wesentlichen das Maschinenspannteil 4 und einen anschließenden Werkzeugschaft, die beide entlang der und um die Längsachse zentrisch ausgebildet sind und integral miteinander verbunden sind. Zur Klarheit sei angemerkt, dass die Längsachse die Mittellängsachse des Hochgeschwindigkeitswerkzeughalters ist.

Das Maschinenspannteil 4 stellt eine Schnittstelle zum Einspannen in die Maschine dar und umfasst bevorzugt am zweiten Ende einen Spannkonus 4a, einen Spannzylinder 4b und eine Nute 4c, die an eine Schnittstelle der Maschine, mit der das Maschinenspannteil 4 verbunden werden soll, angepasst sind. Hierfür gibt es verschiedene Standards, die den Spannkonus 4a, den Spannzylinder 4b und dessen Durchmesser D6 bestimmen.

Der Werkzeugschaft stellt eine integrale Fortführung des Maschinenspannteils 4 entlang der Längsachse dar und weist an seinem äußeren ersten Ende eine erste Bohrung 1e auf, die nach außen die Werkzeugeinführöffnung 5 darstellt, um darin das Werkzeug einführen und festhalten zu können. Bevorzugt ist der Werkzeugschaft dabei ausgebildet, durch eine Erhitzung sich thermisch auszudehnen, um dann das Werkzeug einzuführen, wobei durch eine nachfolgende Abkühlung das Werkzeug klemmend durch die thermische Schrumpfung gehalten wird. Alternativ kann der Werkzeugschaft natürlich auch ausgebildet sein, das Werkzeug anstelle durch die thermischen Klemmung durch eine andere mechanische Klemmung zu halten, wie beispielsweise durch eine Schraubverbindung, Hybridfuttertechnik und/oder durch eine Spannhülse.

Erfindungsgemäß ist der Werkzeugschaft entlang der Längsachse in einen ersten 1, einen zweiten 2 und einen dritten Abschnitt 3 untergliedert, die der Reihe nach integral ineinander übergehen. Dabei ist der erste Abschnitt 1 am ersten Ende mit der Werkzeugeinführungsöffnung 5 angeordnet und in Richtung zum zweiten Abschnitt 2 von einem ersten Durchmesser D1 zu einem zunehmenden zweiten Durchmesser D2 im Wesentlichen kreiskegelstumpfförmig ausgebildet.

Dabei hat der zweite Abschnitt 2 an einer Schnittstelle zum ersten Abschnitt 1 den zweiten Durchmesser D2 und an einer Schnittstelle zu dem dritten Abschnitt 3 einen vierten Durchmesser D4, der größer als der zweite Durchmesser D2 ist. Zwischen der Schnittstelle mit dem zweiten Durchmesser D2 und der Schnittstelle mit dem vierten Durchmesser D4 weist der zweite Abschnitt 2 über dessen Länge und in Bezug auf die Längsachse eine nach außen gewölbte Form auf. Dabei ist die nach außen gewölbte Form eines mittleren Teils des zweiten Abschnitts 2 bevorzugt kugelförmig oder hat einen ovalen Querschnitt entlang der Längsachse. In der Mitte oder nahe der Mitte des zweiten Abschnitts 2 weist dieser einen dritten Durchmesser auf, der dementsprechend größer als der zweite D2 und der vierte Durchmesser D4 ist. Durch die nach außen gewölbte Form weist der zweite Abschnitt eine entsprechende Steifigkeit auf, die sehr vorteilhaft für eine Dämpfung von Schwingungen entlang der Längsachse ist. Durch die nach außen gewölbten Form und die dadurch erzeugte zusätzliche Steifigkeit werden die Schwingungen weitgehend vermieden oder gedämpft. Zusätzlich kann durch die nach außen gewölbte Form eine erhöhte Massenträgheit gebildet werden, um Schwingungen um die Längsachse besser aufzunehmen und zu dämpfen. Alternativ kann durch die nach außen gewölbte Form aber auch sowohl eine erhöhte Steifigkeit als auch eine geringere Masse erzeugt werden, im Vergleich zu einer Form ohne die nach außen gewölbte Form, also wenn der zweite Abschnitt 2 einfach konisch vom zweiten D2 zu, vierten Durchmesser D4 übergehen würde.

Der dritte Abschnitt 3 weist an einer Schnittstelle zum zweiten Abschnitt 2 den vierten Durchmesser D4 auf und hat an einer Schnittstelle zum Maschinenspannteil 4 einen fünften Durchmesser D5. Bevorzugt nimmt der Durchmesser des dritten Abschnitts von der Schnittstelle zum zweiten Abschnitt 2 mit dem vierten Durchmesser D4 bis zur Schnittstelle zum Maschinenspannteil 4 konisch zu. Die konische Zunahme erfolgt hierbei bevorzugt mit dem gleichen Konuswinkel, beispielsweise einem Winkel von etwa 5 Grad, wie im ersten Abschnitt. Am Ende des dritten Abschnitts 3, das an das Maschinenspannteil 4 angrenzt, sind bevorzugt noch Kerben 3b eingebracht, um das Hochgeschwindigkeitswerkzeughalter besser in die Maschine eindrehen und daraus wieder lösen zu können.

Bevorzugt ist der erste Abschnitt 1 kegelstumpfförmig ausgebildet. Bevorzugt ist der dritte Abschnitt 3 kegelstumpfförmig ausgebildet.

Im Innern weist das Schrumpffutter entlang der Längsachse bevorzugt eine Bohrung oder einen Hohlraum auf. Bevorzugt weist das Schrumpffutter im ersten Abschnitt 1 eine erste Bohrung 1e, im zweiten Abschnitt 2 eine zweite Bohrung 2e und im dritten Abschnitt 3 eine dritte Bohrung 3e auf. Bevorzugt ist die Bohrung auch durch das Maschinenspannteil 4 geführt, dass ein durchgehender Kanal vorliegt. Bevorzugt sind der durchgehende Kanal oder die erste 1e und/oder die zweite 2e und/oder die dritte Bohrung 3e durch mindestens ein Trennelement 6a, 6b, 6c getrennt. Zur Klarheit sei angemerkt, dass unter Bohrung auch eine Bohrung verstanden wird, die unterschiedliche Durchmesser haben kann und die auch als Ausdrehung mit einer konischen oder kugeligen oder beliebigen Form verstanden werden kann.

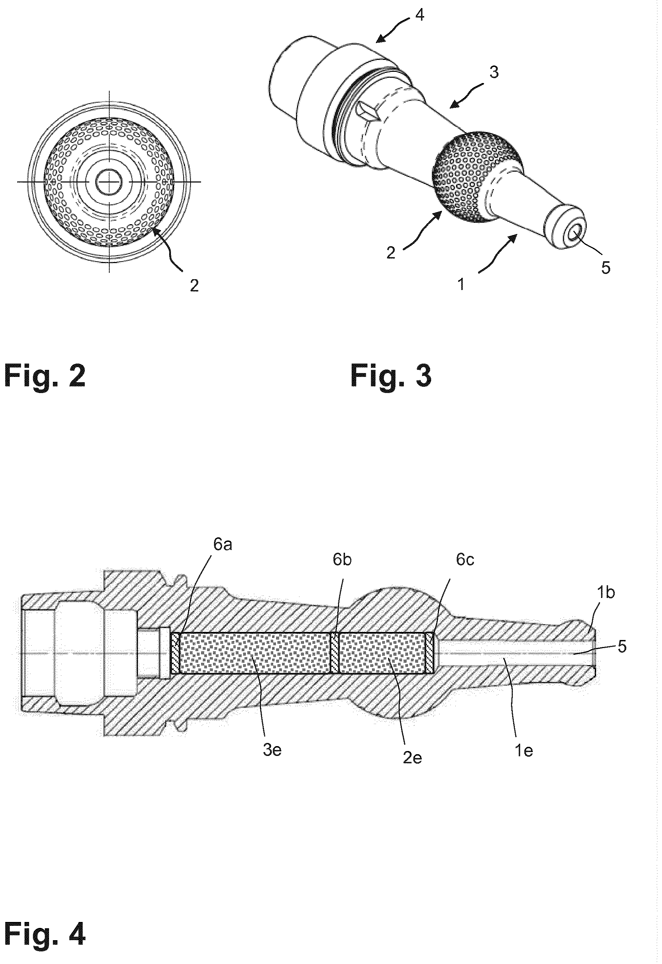

In Fig. 4 ist eine Ausführungsform des Schrumpffutters gemäß Fig.- 1-3 abgebildet, wobei das Schrumpffutter den zweiten 2e und den dritten Hohlraum 3e aufweist, die durch das erste Trennelement 6a, das zweite Trennelement 6b und das dritte Trennelement 6c abgeschlossen sind. Dabei ist es ebenso denkbar, dass das erste 6a, das zweite 6b und das dritte Trennelement 6c auch in benachbarten Abschnitten des Schrumpffutters liegen können. Beispielsweise erstrecket sich der dritte Hohlraum 3e in der in Fig. 4 dargestellten Ausführungsform in das Maschinenspannteil 4 hinein und dementsprechend befindet sich das erste Trennelement 6a darin. Bevorzugt kann auch eines der Trennelemente 6a-6c integral mit dem Schrumpffutter verbunden sein, das beispielsweise nicht ausgebohrt ist, sondern stehen blieb. In der Ausführungsform der Fig. 4 ist das erste Trennelement 6a beispielsweise in dem Maschinenspannteil 4 angeordnet und die dritte Bohrung 3e entsprechend verlängert. In dem dritten Hohlraum 3e oder der Bohrung ist bevorzugt der Füllstoff eingebracht. Bevorzugt ist die zweite Bohrung oder der Hohlraum 2e zum ersten Hohlraum 1e durch das dritte Trennelement 6c getrennt und daher in sich abgeschlossen. In dem zweiten Hohlraum 2e ist bevorzugt ein weiterer Füllstoff oder ein Füllstoffgemisch eingebracht.

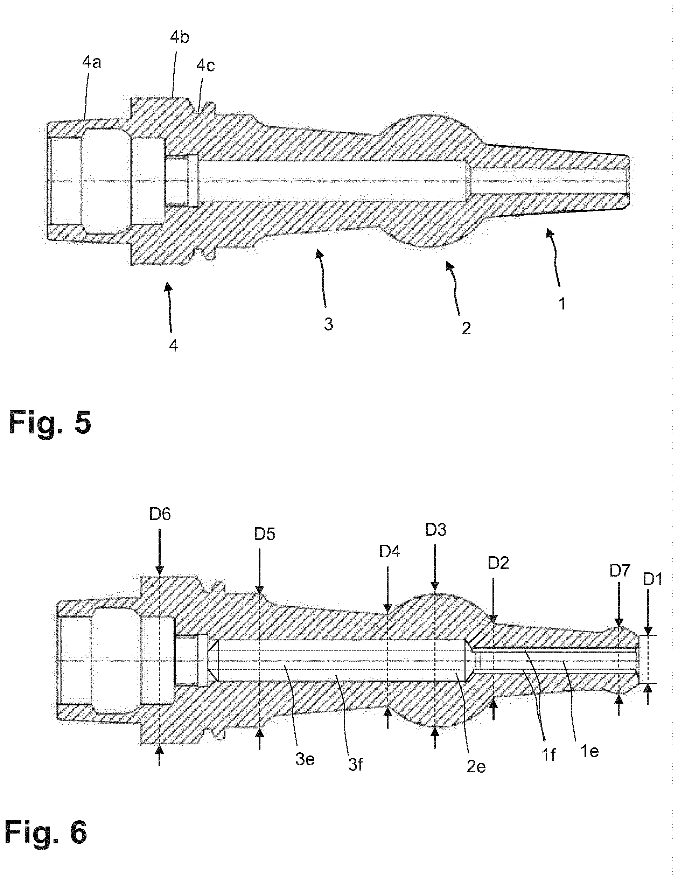

Fig. 5 zeigt eine bevorzugte Ausführungsform des Schrumpffutters ohne die weitere Verdickung 1a im ersten Abschnitt 1.

Die bevorzugte Ausführungsform des Schrumpffutters gemäß Fig. 1A bzw. 1B weist an seinem ersten Ende gleich am Anfang, zum Maschinenspannteil 4 hin gesehen, eine zur Längsachse hin zentrische weitere Verdickung 1a auf, die innerhalb eines äußeren Drittels oder Viertels des ersten Abschnitts am ersten Ende angeordnet ist. Dabei umfasst die weitere Verdickung 1a einen ersten Konus 1b, der vom äußeren Ende mit dem ersten Durchmesser D1 bis zu einem siebten Durchmesser D7 zunimmt, und einen zweiten Konus 1c, der vom siebten Durchmesser D7 bis zu einem Durchmesser abnimmt, der zwischen dem ersten D1 und dem zweiten Durchmesser D2 liegt. Bevorzugt nimmt der erste Konus 1b mit einem ersten Konuswinkel 1d zu, der zwischen 30°- 60° liegt. Der siebte Durchmesser D7 hat dabei einen Durchmesser, der größer als der erste D1 und der zweite Durchmesser D2 ist. Die weitere Verdickung 1a ist dabei so ausgebildet, dass sie das Werkzeug am ersten Ende der ersten Bohrung 1e stärker klemmt als ohne die weitere Verdickung 1a.

Bevorzugt ist die erste Bohrung 1e am äußeren ersten Ende, wo das Werkzeug eingeführt wird, etwas aufgeweitet, um das Werkzeug besser einführen zu können. Viel mehr bevorzugt ist jedoch, dass die erste Bohrung 1e am äußeren ersten Ende, wo das Werkzeug eingeführt wird, keine Aufweitung besitzt und also im Einführungsbereich für das Werkzeug eine zur Längsachse parallele Bohrung aufweist, um das Werkzeug an dieser Stelle besser halten zu können, und um Schwingungen dadurch besser zu unterdrücken oder gar nicht erst aufkommen zu lassen. Dafür kann das Werkzeug dann entsprechend angefast sein, um es gut in die erste Bohrung 1e einführen zu können.

Der Werkzeugschaft mit dem ersten 1, dem zweiten 2 und dem dritten Abschnitt 3 ist grundsätzlich durch eine Form und mit einem entlang der Längsachse variierenden Querschnitt so ausgebildet, um dabei eine möglichst gute Steifigkeit, wenig Gesamtmasse und eine möglichst gute Dämpfungseigenschaft für Schwingungen entlang der Längsachse zu erzeugen. Zur Klarheit ist allgemein bei der Dämpfung der Schwingungen zu verstehen, dass es sich dabei um Schwingungen handelt, die durch eine schnelle Rotation oder Umdrehungszahl des Schrumpffutters um die Längsachse entstehen können, und dass es sich bei den Schwingungen um Schwingungen zur Längsachse, wie bei einer Stimmgabel, handelt. Die Umdrehungszahl, die typischerweise angewendet wird, liegt bevorzugt im Bereich von 20.000 - 100.000 Umdrehungen pro Minute (Upm). Es werden teils aber auch Umdrehungszahlen von bis zu 180.000 Upm angewendet, wofür der Hochgeschwindigkeitswerkzeughalter ausgebildet sein muss. Die hohen Drehzahlen ermöglichen eine hohe Schnittgeschwindigkeit und dadurch einen hohen Vortrieb.

Bevorzugt weist die nach außen gewölbte Form eine Oberfläche mit einer Vielzahl von Mulden auf, die ähnlich der Oberfläche eines Golfballs ist. Dadurch wird weniger störender Schall erzeugt. Zudem wird dadurch Material eingespart, ohne dabei die Steifigkeit des zweiten Abschnitts 2 wesentlich zu beeinträchtigen. Dadurch wird also das Verhältnis von Steifigkeit zu Massenträgheit optimiert. Alternativ kann die Oberfläche auch rillenförmig quer zur oder in Richtung der Längsachse ausgebildet sein, mit den ähnlichen Vorteilen der Steifigkeits- und Gewichtsoptimierung. Andere Muster alternativ zu der rillen- oder Golfballförmigen Oberfläche sind ebenso vorstellbar.

Bevorzugt ist die nach außen gewölbte Form des zweiten Abschnitts 2 mit einer Oberfläche ausgebildet, die größer ist, als wenn die nach außen gewölbte Form eine glatte Oberfläche hätte. Dabei ist die Oberfläche bevorzugt um 20% - 50% größer als wenn die nach außen gewölbte Form eine glatte Oberfläche hätte.

Bevorzugt weisen die Längen des ersten 1, des zweiten 2 und des dritten Abschnitts 3 jeweils eine Länge von 20-60% der Gesamtlänge des Werkzeugschafts auf, wobei bevorzugt die Länge des ersten und des zweiten Abschnitts zusammengenommen weniger als 50% der Gesamtlänge des Werkzeugschafts beträgt.

Als Gesamtlänge des Hochgeschwindigkeitswerkzeughalters sind durch die erfindungsgemäße Geometrie und Art und durch die günstig hoch gedämpften Schwingungseigenschaften nun auch weitaus längere Gesamtlängen als bei herkömmlichen Hochgeschwindigkeitswerkzeughaltern möglich. Dadurch wird eine Bearbeitung von längeren Innenausfräsungen aus einem Werkstück ermöglicht.

Bevorzugt ist der zweite Abschnitt 2 vollständig in der Hälfte des Hochgeschwindigkeitswerkzeughalters angeordnet, die das erste Ende enthält. Alternativ bevorzugt ist der zweite Abschnitt 2 vollständig in dem Drittel des Hochgeschwindigkeitswerkzeughalters angeordnet, das das erste Ende enthält.

Bevorzugt weist der zweite Abschnitt 2 im Innern zentrisch entlang der Längsachse die zweite Bohrung 2e oder einen Hohlraum auf, der mit einem Füllstoff gefüllt ist. Dabei ist der Füllstoff so ausgewählt, um eine möglichst gute zusätzliche Schwingungsdämpfung zu erzeugen. Bevorzugt ist das spezifische Gewicht des Füllstoffs geringer als 50% des spezifischen Gewichts des Materials des Hochgeschwindigkeitswerkzeughalters.

Bevorzugt weist der dritte Abschnitt 3 im Innern zentrisch entlang der Längsachse die dritte Bohrung 3e oder einen Hohlraum auf, der mit einem weiteren Füllstoff gefüllt ist. Dabei ist der weitere Füllstoff bevorzugt derjenige, mit dem auch die zweite Bohrung 2e aufgefüllt ist, oder es ist ein anderer Füllstoff.

Bevorzugt sind der zweite 2e und/oder der dritte Hohlraum 3e oder die jeweilige entsprechende Bohrung 2e, 3e mit mindestens einem der folgenden korpuskulären Füllstoffe, oder aus einer Kombination daraus aufgefüllt: Stahlkugeln, Chromstahlkugeln, Kunststoffkugeln, Keramikkugeln, Quarzsand, Quarz, Sand, Aluminiumkugeln, Silibead-Kugeln, Polyamidkugeln, Polycarbonatkugeln oder andere korpuskuläre Bestandteile. Bevorzugt ist auch die Anordnung von korpuskulären Füllstoffen in Kugellagern ohne Käfig.

Bevorzugt umfasst der Füllstoff der zweiten 2e und/oder dritten Bohrung 3e zusätzlich zu den korpuskulären Füllstoffen eine viskose Flüssigkeit oder Schaum, die/der so vorbestimmt ist, dass dadurch eine besonders gute Schwingungsdämpfung des Hochgeschwindigkeitswerkzeughalters erzeugt wird.

Bevorzugt ist der Hochgeschwindigkeitswerkzeughalter als Schrumpffutter ausgebildet. Alternativ ist der Hochgeschwindigkeitswerkzeughalter als Schraubverbinder oder Hybriddruckverbinder mit Spannhülse mit den oben genannten Merkmalen ausgebildet, wobei ein Teil des Werkzeugschafts von innen schraubenförmig eingedreht oder der Werkzeugschaft der Länge nach zu einem überwiegenden Ausmaß geschlitzt ist, um dadurch eine Spannhülse zur Klemmung des Werkzeugs zu bilden.

Bevorzugt besteht der Hochgeschwindigkeitswerkzeughalter aus einem der folgenden Materialien: Metall wie Stahl und insbesondere dämpfender Stahl, Kunststoff, einem Verbundwerkstoff wie einem Glasfaserverbundwerkstoff.

Bevorzugt ist auch eine Belüftungsbohrung im ersten Abschnitt 1 eingebracht, die den Hohlraum der ersten Bohrung 1e mit der Umgebung verbindet.

Bevorzugt ist die Außenseite des Hochgeschwindigkeitswerkzeughalters gegen Umwelteinflüsse beschichtet.

Bevorzugt ist die Maschine, mit der der Hochgeschwindigkeitswerkzeughalter verbunden wird, eine Dreh-, Fräs- oder eine Bohrmaschine. Schwingungen des Hochgeschwindigkeitswerkzeughalters insbesondere auch bei hohen Umdrehungszahlen zerstören leicht und schnell das Werkzeug, so dass sowohl die Maschine als auch der Hochgeschwindigkeitswerkzeughalter und die Verbindung dazwischen besonders schwingungsarm ausgebildet werden müssen. Schwingungen würden das Werkzeug an den Schneidekanten schnell zerstören. Dazu ist der Hochgeschwindigkeitswerkzeughalter bevorzugt hochgradig zentrisch zur Längsachse ausgewuchtet ausgebildet. Die Schwingungskräfte, die durch das Werkzeug, wie beispielsweise einem Fräser mit zwei Schneidekanten, quer zur Längsachse auf den Hochgeschwindigkeitswerkzeughalter erzeugt und eingeleitet werden, dürfen möglichst keine oder nur so gering wie mögliche Schwingungen erzeugen. Dazu ist der Hochgeschwindigkeitswerkzeughalter ausgebildet, diese möglichst gut zu absorbieren oder zu dämpfen. Durch die nach außen gewölbten Form im zweiten Abschnitt 2 des Hochgeschwindigkeitswerkzeughalters kann die Steifigkeit erhöht und zugleich durch eine Aushöhlung oder durch den zweiten Hohlraum 2e eine Masse des Hochgeschwindigkeitswerkzeughalters reduziert werden.

Bevorzugt ist das Werkzeug dabei ein Fräser, ein Bohrer, ein Drehwerkzeug, ein Reibwerkzeug, welches unbeschichtet oder auch beschichtet sein kann.

Bevorzugt dient der Hochgeschwindigkeitswerkzeughalter zu einer spanenden Bearbeitung von Materialien, bevorzugt Dentalmaterialien, wie beispielsweise Legierungen, wie Kobalt-Chrom-Legierungen (beispielsweise Coron®),, Kunststoffen, Polyurethane, Aluminium, Glas, Guss, Feldspaltkeramiken, Titangrade 1-5 jeglicher Art, Hartmetalle, Blei, Zinn, Zink, Kupfer, Zirkonoxide, Aluminiumoxide, Borkarbide, Siliziumnitride, Siliziumcarbide, Edelstahl, Werkzeugstahl und Einsatzstahlsorten.

Bevorzugt ist der Hochgeschwindigkeitswerkzeughalter aus einem Stück und ohne Verstellelemente, wie beispielsweise Schrauben oder dergleichen, ausgebildet, so dass der Hochgeschwindigkeitswerkzeughalter in Betrieb robust ist. Dadurch besteht beispielsweise auch keine Gefahr einer Verstellung oder Veränderung durch ein Verdrehen der Verstellelemente in Betrieb, so dass der Hochgeschwindigkeitswerkzeughalter ausgewuchtet bleibt und eine sich unter Umständen einstellende Unwucht vermieden wird.

Wie auch in Fig. 6 dargestellt, ist im Hochgeschwindigkeitswerkzeughalter bevorzugt mindestens ein intern verlaufender Durchflusskanal 1f, der in Längsrichtung entlang dem Schaft verläuft, ausgebildet. Dabei kann der Durchflusskanal 1f beispielsweise durch die zuvor bezeichneten Hohlräume gebildet sein oder er zusätzlich ausgebildet sein. Bevorzugt ist der mindestens eine Durchflusskanal 1f als eine Reihe von Durchflusskanälen ausgebildet, die zentrisch im Schaft und entlang der Längsrichtung des Schafts angeordnet sind. Dabei sind die Durchflusskanäle 1f um die Mittelachse des Schafts herum so angeordnet, dass die Mittelachse gleichzeitig die Schwerpunktsachse bildet und der Schaft dadurch ausgewuchtet bleibt. Bevorzugt ist der Werkzeugschaft so ausgebildet, dass er gleichachsig zur ersten Bohrung (1e) mindestens einen zentrischen Durchflusskanal (1f) aufweist, durch den ein Medium strömen kann. Bevorzugt ist der Werkzeugschaft alternativ oder zusätzlich so ausgebildet ist, dass er am ersten Ende parallel zur ersten Bohrung (1e) mindestens zwei Durchflusskanäle (1f) aufweist, die um die erste Bohrung (1e) herum so symmetrisch angeordnet sind, dass der Hochgeschwindigkeitswerkzeughalter ausgewuchtet bleibt, wobei die Durchflusskanäle (1f) ausgebildet sind, dass durch sie das Medium strömen kann.

Bevorzugt ist der Durchflusskanal 1f angrenzend an den Hohlraum 3e und mit diesem verbunden, so dass ein Medium durchströmen kann. Dabei kann das Medium Luft, ein Gas, Dampf, eine Flüssigkeit oder ein Gemisch daraus sein, das hindurch geleitet oder gepumpt wird, um beispielsweise eine Kühlung zu erzeugen. Bevorzugt ist die Flüssigkeit eine Kühlflüssigkeit. Bevorzugt wird das Medium mit Niederdruck oder Hochdruck, insbesondere mit einem Druck von 0 bis 130 bar durch die Durchflusskanäle gepumpt.

Der Hohlraum 3e, wie in den Figuren 1, 4 und 6 dargestellt, der auch eine Bohrung sein kann, hat bevorzugt eine innere Form eines Käfigs 3f mit einem ersten Innendurchmesser am einen Ende, einem zweiten Innendurchmesser am anderen Ende und einem dritten Innendurchmesser zwischen dem einen und dem anderen Ende, der größer als der erste und der zweite Innendurchmesser ist. Bevorzugt ist der Hohlraum 3e und der Käfig 3f mit Kugeln oder dem Füllstoff, wie oben näher beschrieben, gefüllt. Der Käfig dient zusätzlich zur Dämpfung seitlicher Schwingungen.

Vorstellbar ist auch ein separater Käfig, der in den Hohlraum 3e eingeführt ist und im Innern das Füllmaterial enthält, um die seitlichen Schwingungen besser zu dämpfen.

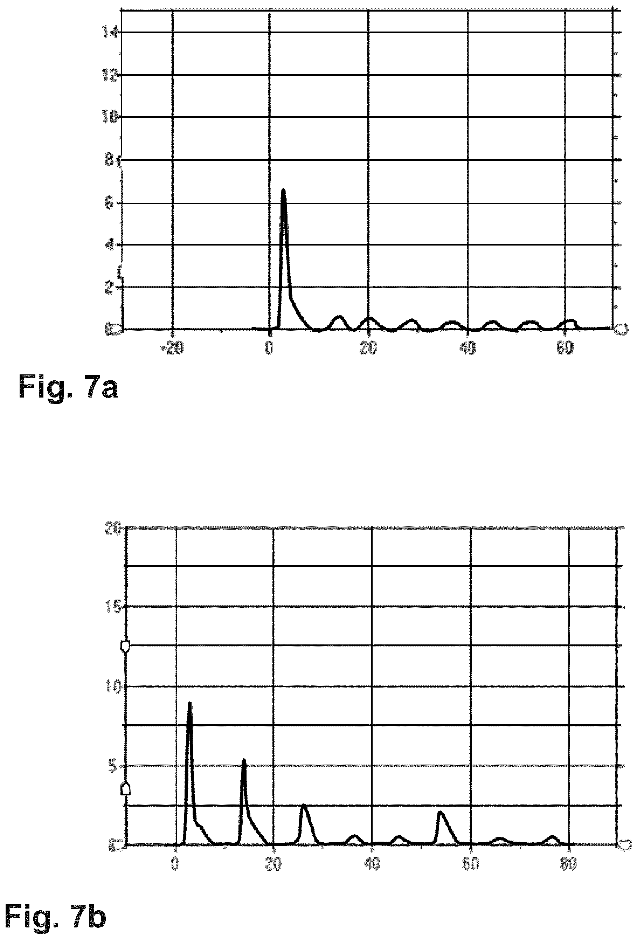

Fig. 7a zeigt beispielhaft das gemessene Dämpfungsverhalten eines der erfindungsgemäßen Hochgeschwindigkeitswerkzeughalter auf eine seitliche, impulsartige Anregung. Die Abszisse ist eine Zeitdarstellung in ms und die Ordinate eine Darstellung der Schwingungsamplitude. Im Vergleich dazu zeigt Fig. 7b ein Dämpfungsverhalten eines Hochgeschwindigkeitswerkzeughalters, in dem die erfindungsgemäße nach außen gewölbte kugelförmige oder ovale Form am Werkzeugschaft weggelassen wurde, wobei die gleichen Anregungsbedingungen wie in Fig. 7a eingesetzt wurden. Man erkennt das erhöhte Schwingverhalten bzw. das deutlich langsamere Abklingen der Schwingungen..

Bevorzugt sind Übergangsbereiche von Formen, wie beispielsweise der nach außen gewölbten Form des Teilbereichs, die kugelförmig oder oval ausgebildet ist, oder beispielsweise die Form vom vierten zum fünften Durchmesser (D4 - D5) zu den Nachbarbereichen gerundet ausgebildet. Dabei weisen die Übergangsbereiche auch bevorzugt stetige Krümmungen auf. Zur Klarheit ist unter den Formen und unter der nach außen gewölbten Form des Teilbereichs eine Querschnittform entlang der Längsachse des Hochgeschwindigkeitswerkzeughalters zu verstehen.

Bevorzugt ist unter der kegelstumpfförmigen Form des ersten und zweiten Abschnitts des Schafts ein zunehmender Durchmesser zu verstehen, vom ersten Durchmesser D1 bis zum zweiten Durchmesser D2 und vom vierten Durchmesser D4 bis zum fünften Durchmesser D5.

Bevorzugt ist die erste Bohrung 1e mit einem Anschlag für eine Werkzeugeinführung ausgebildet. Ebenso kann die Bohrung 1e ohne den Anschlag für eine Werkzeugeinführung ausgebildet sein.

Weiterhin kommen die folgenden Materialien für den Hochgeschwindigkeitswerkzeughalter in Betracht: Polyamid bekannt unter dem Namen Nylon 6,6 synthetisiert, PC, Polyamid 12, bekannt auch als FDM Nylon, ABS, Polyetherimide, Polycarbonate, Polyphenylsulfone, einem Verbundwerkstoff wie beispielsweise einem Glasfaserverbundwerkstoff. Die strukturelle Form der genannten Materialien ist in der Ausführung nicht beschränkt. Dabei umfasst die strukturelle Form des Materials oder der Materialien bevorzugt Einzelfäden, mindestens einen Film, Körnchen, Platten, Röhrchen, eine Stabform oder Komponenten davon. Die Materialen haben Markennamen wie beispielsweise Ultem, Capron, Nylacasr, Endur, Nylon 12, Orgamid, Fortus, Akulon K und Akulon F. Bevorzugt besteht der Hochgeschwindigkeitswerkzeughalter aus Copolymeren Nylon 6/66 mit einzelnen oder gemischten Einzelkomponenten. Die Zusammensetzung kann dabei strukturell unterschiedlich und/oder eine gemischte chemische Zusammensetzung haben. Bevorzugt wird ein Material verwendet, das einen metallurgische Werkstoff darstellt als einen bevorzugt formschlüssigen Verbund mit Polyamid, Nylon 6,6 synthetisiert, PC, Polyamide 12, FDM Nylon, ABS, Polyetherimide, Polycarbonate, und/oder Polyphenylsulfone.

Weitere mögliche Ausbildungsformen sind in den folgenden Ansprüchen beschrieben. Insbesondere können auch die verschiedenen Merkmale der oben beschriebenen Ausführungsformen miteinander kombiniert werden, soweit sie im Rahmen der Ansprüche bleiben.

Zur Klarheit sei angemerkt, dass im Rahmen dieser Beschreibung und der Ansprüche der "zweite Abschnitt 2" gleichbedeutend ist mit dem "Teilbereich des im Wesentlichen kreiskegelstumpfförmigen Werkzeugschafts zwischen der Werkzeugeinführungsöffnung und dem Maschinenspannteil mit einer nach außen gewölbten, bevorzugt kugelförmigen Form" oder kurz mit dem "Teilbereich mit der nach außen gewölbten Form". Der erste Abschnitt 1 ist dabei gleichbedeutend mit einem weiteren Teilbereich des Werkzeugschafts, der das äußere Ende des Werkzeugschafts an der Werkzeugeinführungsöffnung 5 bildet und der mit dem Teilbereich mit der nach außen gewölbten Form integral verbunden ist. Der dritte Abschnitt 3 ist gleichbedeutend mit einem abermals weiteren Teilbereich des Werkzeugschafts, der sich integral an den Teilbereich mit der nach außen gewölbten Form anschließt und der auf der anderen Seite mit dem Maschinenspannteil verbunden ist.

Die In den Ansprüchen genannten Bezugszeichen dienen der besseren Verständlichkeit, beschränken aber die Ansprüche nicht auf die in den Figuren dargestellten Formen.

### Bezugszeichenliste

- 1: erster Abschnitt des Werkzeugschafts
- 1a: weitere Verdickung
- 1b: erster Konus
- 1c: zweiter Konus
- 1d: erster Konuswinkel des ersten Konus zur Mittelachse
- 1e: erste Bohrung (des zweiten Teils des Werkzeugschafts)
- 1f: Durchflusskanal
- 2: zweiter Abschnitt des Werkzeugschafts
- 2e: zweite Bohrung
- 3: dritter Abschnitt des Werkzeugschafts
- 3a: Konuswinkel
- 3b: Kerbe
- 3e: dritte Bohrung
- 3f: Käfig
- 4: Maschinenspannteil
- 4a: Spannkonus
- 4b: Spannzylinder
- 4c: Nute
- 5: Werkzeugeinführungsöffnung
- 6a: erstes Trennelement
- 6b: zweites Trennelement
- 6c: drittes Trennelement
- D1-D7: erster - siebter Durchmesser

## Patentansprüche

1. Hochgeschwindigkeitswerkzeughalter zur Aufnahme eines Werkzeugs an seinem ersten Ende und zum Einspannen in eine Maschine an seinem zweiten Ende, wobei die Enden an den entgegengesetzten Seiten der Längsachse des Hochgeschwindigkeitswerkzeughalters angeordnet sind, wobei der Hochgeschwindigkeitswerkzeughalter folgendes umfasst:
a) einen Werkzeugschaft (1, 2, 3), der entlang der Längsachse zentrisch ausgebildet ist und das erste Ende des Hochgeschwindigkeitswerkzeughalters bestimmt, wobei am ersten Ende eine Werkzeugeinführungsöffnung (5) mit einer ersten Bohrung (1e) zur Aufnahme des Werkzeugs ausgebildet ist, und
b) ein ebenfalls entlang der Längsachse zentrisch ausgebildetes Maschinenspannteil (4), das mit dem Werkzeugschaft (1, 2, 3) an einem dem ersten Ende gegenüberliegenden Ende integral verbunden ist und eine Schnittstelle zum Einspannen in die Maschine darstellt,
c) wobei der Werkzeugschaft (1, 2, 3) im Wesentlichen kreiskegelstumpfförmig und bevorzugt kreiskegelstumpfförmig ausgebildet ist, wobei ein erster Durchmesser (D1) am ersten Ende mit der Werkzeugeinführungsöffnung kleiner ist als ein fünfter Durchmesser (D5) am zweiten Ende am Maschinenspannteil und **dadurch gekennzeichnet, dass**
d) ein Teilbereich des im Wesentlichen kreiskegelstumpfförmigen, bevorzugt kreiskegelstumpfförmigen, Werkzeugschafts (1, 2, 3) zwischen Werkzeugeinführungsöffnung und Maschinenspannteil eine nach außen gewölbte kugelförmige oder ovale Form aufweist,
wobei sich ein zusätzliches Materialvolumen zwischen dem kreiskegelstumpfförmigen Werkzeugschaft (1, 2, 3) und der nach außen gewölbten Form ergibt.

2. Hochgeschwindigkeitswerkzeughalter gemäß Anspruch 1, wobei der Werkzeugschaft entlang der Längsachse in einen ersten (1), zweiten (2) und dritten Abschnitt (3) untergliedert ist, die der Reihe nach integral ineinander übergehen, wobei
- der erste Abschnitt (1) am ersten Ende mit der Werkzeugeinführungsöffnung (5) angeordnet ist und in Richtung zum zweiten Abschnitt (2) vom ersten Durchmesser (D1) zu einem zweiten Durchmesser (D2) im Wesentlichen kreiskegelstumpfförmig zunehmend ausgebildet ist;
- der zweite Abschnitt (2), der dem Teilbereich mit der nach außen gewölbten Form entspricht, an einer Stelle, die dem ersten Abschnitt (1) angrenzt, den zweiten Durchmesser (D2) hat und an einer Stelle, die dem dritten Abschnitt (3) angrenzt, einen vierten Durchmesser (D4) hat, der größer als oder gleich wie der zweite Durchmesser (D2) ist, wobei der zweite Abschnitt (2) über dessen Länge die in Bezug auf die Längsachse nach außen gewölbte und bevorzugt kugelige Form hat; und
- der dritte Abschnitt (3), an einer Stelle, die dem zweiten Abschnitt (2) angrenzt, den vierten Durchmesser (D4) hat und weiter bis zum fünften Durchmesser (D5) konisch zunimmt.

3. Hochgeschwindigkeitswerkzeughalter gemäß Anspruch 1 oder 2, wobei die nach außen gewölbte Form eine Oberfläche mit einer Vielzahl von Mulden aufweist, die ähnlich der Oberfläche eines Golfballs, oder rillenförmig quer zur Längsachse oder rillenförmig in Richtung der Längsachse ausgebildet sind.

4. Hochgeschwindigkeitswerkzeughalter gemäß einem oder mehreren der vorstehenden Ansprüche, wobei die nach außen gewölbte Form des zweiten Abschnitts (2) mit einer Oberfläche ausgebildet ist, die zumindest 30% größer ist, als wenn die nach außen gewölbte Form eine glatte Oberfläche hätte.

5. Hochgeschwindigkeitswerkzeughalter gemäß einem oder mehreren der vorstehenden Ansprüche 2-4, wobei die Längen des ersten (1), des zweiten (2) und des dritten Abschnitts (3) jeweils eine Länge von 20-60% der Gesamtlänge des Werkzeugschafts aufweisen; und/oder
wobei eine Länge des ersten und des zweiten Abschnitts zusammengenommen kleiner als 50% der Gesamtlänge des Werkzeugschafts beträgt; und/oder
wobei der zweite Abschnitt (2) vollständig in der Hälfte des Hochgeschwindigkeitswerkzeughalters angeordnet ist, die das erste Ende enthält; oder
wobei der zweite Abschnitt (2) vollständig in dem Drittel des Hochgeschwindigkeitswerkzeughalters angeordnet ist, das das erste Ende enthält.

6. Hochgeschwindigkeitswerkzeughalter gemäß einem oder mehreren der vorstehenden Ansprüche, wobei der Teilbereich mit der nach außen gewölbten Form im Innern zentrisch entlang der Längsachse eine zweite Bohrung (2e) oder einen Hohlraum aufweist, der mit einem Füllstoff gefüllt ist.

7. Hochgeschwindigkeitswerkzeughalter gemäß einem oder mehreren der vorstehenden Ansprüche 2-5, wobei der dritte Abschnitt (3) im Innern zentrisch entlang der Längsachse eine dritte Bohrung (3e) oder einen Hohlraum aufweist, der mit einem weiteren Füllstoff gefüllt ist.

8. Hochgeschwindigkeitswerkzeughalter gemäß Anspruch 6 oder 7, wobei der Füllstoff der zweiten und/oder dritten Bohrung (2e, 3e) einen der folgenden korpuskulären Füllstoffe oder eine Kombination daraus umfasst, wie Stahlkugeln, Chromstahlkugeln, Kunststoffkugeln, Keramikkugeln, Quarzsand, Quarz, Sand, Aluminiumkugeln, Silibead-Kugeln, Polyamidkugeln, Polycarbonatkugeln oder andere korpuskuläre Bestandteile.

9. Hochgeschwindigkeitswerkzeughalter gemäß Anspruch8, wobei der Füllstoff der zweiten und/oder dritten Bohrung (2e, 3e) zusätzlich zu dem mindestens einen korpuskulären Füllstoff eine viskose Flüssigkeit oder Schaum umfasst, die/der dazu dienen, um eine besonders gute Schwingungsdämpfung des Hochgeschwindigkeitswerkzeughalters zu erzeugen.

10. Hochgeschwindigkeitswerkzeughalter gemäß einem oder mehreren der vorstehenden Ansprüche, wobei der Hochgeschwindigkeitswerkzeughalter als Schrumpffutter ausgebildet ist, bei dem der Werkzeugschaft das durch eine thermische Ausdehnung und Schrumpfung das Werkzeug klemmend hält, oder der ausgebildet ist, durch einen Schraubverbinder und eine Spannhülse das Werkzeug klemmend zu halten.

11. Hochgeschwindigkeitswerkzeughalter gemäß einem oder mehreren der vorstehenden Ansprüche, wobei er aus einem der folgenden Materialien besteht, wie Metall, Kunststoff, einem Verbundwerkstoff, einem Glasfaserverbundwerkstoff, Nylon, 6,6 synthetisiert, PC, Polyamide 12, FDM Nylon, ABS, Polyetherimide, Polycarbonate, und/oder Polyphenylsulfone.

12. Hochgeschwindigkeitswerkzeughalter gemäß einem oder mehreren der vorstehenden Ansprüche, wobei der Hochgeschwindigkeitswerkzeughalter zum Einspannen in eine Dreh-, Fräs- oder Bohrmaschine ausgebildet ist.

13. Hochgeschwindigkeitswerkzeughalter gemäß einem oder mehreren der vorstehenden Ansprüche, wobei das Werkzeug ein Fräser, ein Bohrer, ein Drehwerkzeug, oder ein Reibwerkzeug ist, und welches unbeschichtet, beschichtet oder antikorrosiv beschichtet ist.

14. Hochgeschwindigkeitswerkzeughalter gemäß einem oder mehreren der vorstehenden Ansprüche 2-13, wobei der erste Abschnitt (1) am ersten Ende nach dem ersten Durchmesser (D1) entlang der Längsachse eine weitere Verdickung (1a) mit einem siebten Durchmesser (D7) aufweist, wobei die Verdickung (1a) vom ersten Durchmesser (D1) zunächst zunimmt, nach dem siebten Durchmesser (D7) dann wieder abnimmt und dann weiterlaufend bis zum zweiten Durchmesser (D2) am Übergang zum zweiten Abschnitt (2) konisch zunimmt, wobei die weitere Verdickung (1a) ausgebildet ist, lokal eine höhere Steifigkeit und dadurch ein genügend starkes Klemmen des Werkstücks zu erzeugen.

15. Hochgeschwindigkeitswerkzeughalter gemäß einem oder mehreren der vorstehenden Ansprüche,
wobei die erste Bohrung (1e) so weit und durchgängig ausgebildet ist, dass sich das Werkzeug ohne Anschlag darin einführen lässt; und/oder
wobei der Werkzeugschaft so ausgebildet ist, dass er gleichachsig zur ersten Bohrung (1e) mindestens einen zentrischen Durchflusskanal (1f) aufweist, durch den ein Medium strömen kann; und/oder
wobei der Werkzeugschaft so ausgebildet ist, dass er am ersten Ende parallel zur ersten Bohrung (1e) mindestens zwei Durchflusskanäle (1f) aufweist, die um die erste Bohrung (1e) herum so symmetrisch angeordnet sind, dass der Hochgeschwindigkeitswerkzeughalter ausgewuchtet bleibt, wobei die Durchflusskanäle (1f) ausgebildet sind, dass durch sie ein Medium strömen kann; und/oder
wobei der Werkzeugschaft ausgebildet ist, dass er am ersten Ende parallel zur ersten Bohrung (1e) mindestens zwei Durchflusskanäle (1f) aufweist, die um die erste Bohrung (1e) herum symmetrisch angeordnet sind und die erste Bohrung (1e) schneiden, so dass durch nichtgeschnittene Teile der ersten Bohrung (1e) Abstützstege zum Halten und Einspannen des Werkzeugs gebildet werden, wobei die mindestens zwei Durchflusskanäle am ersten Ende zum Werkzeug hin offen sind, um ein Medium durchströmen zu lassen;
wobei das Medium ein Gas, Luft, Dampf, eine Flüssigkeit, eine Kühlflüssigkeit oder ein Gemisch daraus ist.

## Claims

1. High-speed tool holder for receiving a tool at its first end and clamping in a machine at its second end; the ends being arranged on the opposite sides of the longitudinal axis of the high-speed tool holder; the high-speed tool holder comprising:
a) a tool shaft (1, 2, 3)
which is formed centrically along the longitudinal axis and defines the first end of the high-speed tool holder; a tool insertion opening (5) with a first bore (1e) for receiving the tool being formed at the first end, and
b) a machine clamping part (4) which is also formed centrically along the longitudinal axis, which is integrally connected to the tool shaft (1, 2, 3) at an end opposite to the first end and which forms an interface for clamping in the machine,
c) the tool shaft (1, 2, 3) having substantially and preferably the shape of a truncated circular cone; a first diameter (D1) at a first end with the tool insertion opening being smaller than a fifth diameter (D5) at the second end of the machine clamping part; and
**characterized in that**
d) a portion of the tool shaft (1, 2, 3) having substantially and preferably the shape of a truncated circular cone has a spherical or oval shape bulging outwards between the tool insertion opening and the machine clamping part,
resulting in an additional material volume between the tool shaft (1, 2, 3) having the shape of a truncated circular cone and the shape bulging outwards.

2. High-speed tool holder according to Claim 1, the tool shaft being divided along the longitudinal axis in a first (1), a second (2) and a third portion (3) integrally blending with each other in sequence, wherein
- the first portion (1) is arranged on the first end with the tool insertion opening (5) and formed with an increasing diameter substantially in the shape of a truncated circular cone, from the first diameter (D1) towards the second diameter (D2), in the direction pointing towards the second portion (2);
- the second portion (2), corresponding to the portion with the outwardly bulging shape, has the second diameter (D2) in a position bordering on the first portion (1) and a fourth diameter (D4) in a position bordering on the third portion (3), which is larger than or equal to the second diameter (D2); the second portion (2) having, over its length, the outwardly bulging and preferably spherical shape with respect to the longitudinal axis; and
- the third portion (3) having, in a position bordering on the second portion (2), the fourth diameter (D4) and conically increasing further up to the fifth diameter (D5).

3. High-speed tool holder according to Claim 1 or 2, the outwardly bulging shape having a surface with a plurality of recesses formed similar to the surface of a golf ball or groove-shaped transversely to the longitudinal axis or groove-shaped in the direction of the longitudinal axis.

4. High-speed tool holder according to one or more of the above Claims, the outwardly bulging shape of the second portion (2) having a surface which is at least 30% larger than it would be if it were smooth.

5. High-speed tool holder according to one or more of the above Claims 2-4, the first (1), the second (2) and the third portion (3) each having a length of 20-60% of the overall length of the tool shaft; and/or
a length of the first and the second portion combined being less than 50% of the overall length of the tool shaft; and/or the second portion (2) being arranged in its entirety in the half of the high-speed tool holder containing the first end; or
the second portion (2) being arranged in its entirety in the third of the high-speed tool holder containing the first end.

6. High-speed tool holder according to one or more of the above Claims, the portion with the outwardly bulging shape having in its interior centrically along the longitudinal axis a second bore (2e) or a cavity filled with a filler.

7. High-speed tool holder according to one or more of the above Claims 2-5, the third portion (3) having in its interior centrically along the longitudinal axis a third bore (3e) or a cavity filled with another filler.

8. High-speed tool holder according to Claim 6 or 7, the filler in the second and/or the third bore (2e, 3e) comprising one of the following corpuscular fillers or a combination thereof: for example steel beads, chromium steel beads, plastic beads, ceramic beads, quartz sand, quartz, sand, aluminium beads, SiLibead beads, polyamide beads, polycarbonate beads or other corpuscular components.

9. High-speed tool holder according to Claim 8, the filler in the second and/or the third bore (2e, 3e) comprising, in addition to the at least one corpuscular filler, a viscous liquid or foam intended to produce particularly good vibration damping of the high-speed tool holder.

10. High-speed tool holder according to one or more of the above Claims, the high-speed tool holder being formed as a shrink fit chuck where the tool shaft clampingly retains the tool by thermal expansion and shrinking; or being formed so as to clampingly retain the tool by means of a screw connector and a clamping sleeve.

11. High-speed tool holder according to one or more of the above Claims, consisting of one of the following materials: for example metal, plastic, a composite material, a glass fibre composite material, nylon, 6.6 synthesized, PC, polyamide 12, FDM nylon, ABS, polyetherimide, polycarbonate and/or polyphenylsulfone.

12. High-speed tool holder according to one or more of the above Claims, the high-speed tool holder being adapted for clamping in a lathe, milling or drilling machine.

13. High-speed tool holder according to one or more of the above Claims, where the tool is a milling tool, a drilling tool, a lathe or a reamer, and is coated, uncoated or anti-corrosively coated.

14. High-speed tool holder according to one or more of the above Claims 2-13, the first portion (1) having, at its first end behind the first diameter (D1) along the longitudinal axis, an additional bulge (1a) with a seventh diameter (D7), the bulge (1a) first increasing from the first diameter (D1), then again decreasing after the seventh diameter (D7) and then continuously increasing conically up to the second diameter (D2) at the transition to the second portion (2); the additional bulge (1a) being adapted to cause locally a higher rigidity and consequently sufficiently strong clamping of the workpiece.

15. High-speed tool holder according to one or more of the above Claims,
the first bore (1e) being formed wide and continuous enough so that the tool can be inserted therein without a stop; and/or
the tool shaft being formed such that it has, coaxially with the first bore (1e), at least one centric flow channel (1f) through which a medium can flow; and/or
the tool shaft being formed such that it has at its first end, in parallel to the first bore (1e), at least two flow channels (1f) arranged symmetrically around the first bore (1e) such that the high-speed tool holder remains balanced, the flow channels (1f) being formed such that a medium can flow through them; and/or
the tool shaft being formed such that it has at its first end, in parallel to the first bore (1e), at least two flow channels (1f) which are arranged symmetrically around the first bore (1e) and intersect the first bore (1e) such that through non-intersected parts of the first bore (1e), supporting webs for retaining and clamping the tool are formed; the at least two flow channels being open at the first end towards the tool so as to let a medium flow through,
the medium being a gas, air, steam, a liquid, a cooling liquid or a mixture thereof.

## Revendications

1. Porte-outil pour outil à grande vitesse destiné à recevoir un outil au niveau de sa première extrémité et à le serrer dans une machine au niveau de sa seconde extrémité, dans lequel les extrémités sont agencées sur les côtés opposés de l'axe longitudinal du porte-outil pour outil à grande vitesse, le porte-outil pour outil à grande vitesse comprenant ce qui suit :
a) une tige d'outil (1, 2, 3) qui est formée de manière centrée le long de l'axe longitudinal et définit la première extrémité du porte-outil pour outil à grande vitesse, un orifice d'insertion d'outil (5) ayant un premier alésage (le) étant formé au niveau de la première extrémité pour recevoir l'outil, et
b) une partie de serrage de machine (4) également formée de manière centrée le long de l'axe longitudinal, laquelle partie de serrage de machine étant reliée d'un seul tenant à la tige d'outil (1, 2, 3) à une extrémité opposée à la première extrémité et formant une interface pour le serrage dans la machine,
c) dans lequel la tige d'outil (1, 2, 3) a une forme sensiblement tronconique circulaire et a de préférence une forme tronconique circulaire, un premier diamètre (D1) au niveau de la première extrémité ayant l'orifice d'insertion d'outil étant inférieur à un cinquième diamètre (D5) au niveau de la seconde extrémité sur la partie de serrage de machine et
**caractérisé en ce que**
d) une portion de la tige d'outil (1, 2, 3) de forme sensiblement tronconique circulaire, de préférence de forme tronconique circulaire, entre l'orifice d'insertion d'outil et la partie de serrage de machine a une forme sphérique ou ovale bombée vers l'extérieur, dans lequel il en résulte un volume de matière supplémentaire entre la tige d'outil de forme tronconique circulaire (1, 2, 3) et la forme bombée vers l'extérieur.

2. Porte-outil pour outil à grande vitesse selon la revendication 1, dans lequel la tige d'outil est subdivisée le long de l'axe longitudinal en une première (1), deuxième (2) et troisième (3) parties qui se prolongent en série d'un seul tenant les unes dans les autres, dans lequel
- la première partie (1) est agencée au niveau de la première extrémité ayant l'orifice d'insertion d'outil (5) et a une forme sensiblement tronconique circulaire qui augmente en direction de la deuxième partie (2) depuis le premier diamètre (D1) jusqu'à un deuxième diamètre (D2),
- la deuxième partie (2) qui correspond à la portion ayant la forme bombée vers l'extérieur, a le deuxième diamètre (D2) à un emplacement qui jouxte la première partie (1), et a un quatrième diamètre (D4) à un emplacement qui jouxte la troisième partie (3), lequel quatrième diamètre étant supérieur ou égal au deuxième diamètre (D2), dans lequel la deuxième partie (2) a, sur sa longueur, la forme bombée vers l'extérieur et de préférence sphérique par rapport à l'axe longitudinal, et
- la troisième partie (3) a le quatrième diamètre (D4) à un emplacement qui jouxte la deuxième partie (2), et augmente également de manière conique jusqu'au cinquième diamètre (D5).

3. Porte-outil pour outil à grande vitesse selon la revendication 1 ou 2, dans lequel la forme bombée vers l'extérieur comporte une surface avec une pluralité de creux qui sont formés de manière analogue à la surface d'une balle de golf, ou en forme de rainures transversalement à l'axe longitudinal ou en forme de nervures en direction de l'axe longitudinal.

4. Porte-outil pour outil à grande vitesse selon une ou plusieurs des revendications précédentes, dans lequel la forme bombée vers l'extérieur de la deuxième partie (2) est formée avec une surface qui est au moins 30 % plus grande que si la forme bombée vers l'extérieur était une surface lisse.

5. Porte-outil pour outil à grande vitesse selon une ou plusieurs des revendications 2 à 4 précédentes, dans lequel les longueurs de la première (1), de la deuxième (2) et de la troisième (3) parties représentent respectivement une longueur de 20 à 60 % de la longueur totale de la tige d'outil, et/ou
dans lequel une longueur de la première et de la deuxième parties prises ensemble est inférieure à 50 % de la longueur totale de la tige d'outil, et/ou
dans lequel la deuxième partie (2) est agencée entièrement dans la moitié du porte-outil pour outil à grande vitesse qui contient la première extrémité, ou
dans lequel la deuxième partie (2) est agencée entièrement dans le tiers du porte-outil pour outil à grande vitesse qui contient la première extrémité.

6. Porte-outil pour outil à grande vitesse selon une ou plusieurs des revendications précédentes, dans lequel la portion ayant la forme bombée vers l'extérieur comporte à l'intérieur, de manière centrée le long de l'axe longitudinal, un deuxième alésage (2e) ou une cavité qui est rempli d'une charge.

7. Porte-outil pour outil à grande vitesse selon une ou plusieurs des revendications 2 à 5 précédentes, dans lequel la troisième partie (3) comporte à l'intérieur, de manière centrée le long de l'axe longitudinal, un troisième alésage (3e) ou une cavité qui est rempli d'une charge supplémentaire.

8. Porte-outil pour outil à grande vitesse selon la revendication 6 ou 7, dans lequel la charge du deuxième et/ou troisième alésage (2e, 3e) comprend l'une des charges corpusculaires suivantes ou une combinaison de celles-ci, telles que des billes d'acier, des billes d'acier chromé, des billes de matière plastique, des billes de céramique, du sable de quartz, du quartz, du sable, des billes d'aluminium, des billes de verre de type Silibead, des billes de polyamide, des billes de polycarbonate ou d'autres composants corpusculaires.

9. Porte-outil pour outil à grande vitesse selon la revendication 8, dans lequel la charge du deuxième et/ou troisième alésage (2e, 3e) comprend, en plus de la au moins une charge corpusculaire, un liquide visqueux ou de la mousse qui sert à produire un amortissement des vibrations particulièrement efficace du porte-outil pour outil à grande vitesse.

10. Porte-outil pour outil à grande vitesse selon une ou plusieurs des revendications précédentes, dans lequel le porte-outil pour outil à grande vitesse est formé comme un mandrin à ajustement fretté, dans lequel la tige d'outil maintient l'outil de manière serrée par une dilatation thermique et un retrait, ou est réalisé de manière à maintenir l'outil de manière serrée par un raccord vissé et une douille de serrage.

11. Porte-outil pour outil à grande vitesse selon une ou plusieurs des revendications précédentes, dans lequel il est composé de l'un des matériaux suivants, tels qu'un métal, une matière plastique, un matériau composite, un matériau renforcé par des fibres de verre, un nylon, 6,6 synthétisé, PC, un polyamide 12, un nylon FDM, de l'ABS, un polyétherimide, un polycarbonate et/ou une polyphénylsulfone.

12. Porte-outil pour outil à grande vitesse selon une ou plusieurs des revendications précédentes, dans lequel le porte-outil pour outil à grande vitesse est adapté pour un serrage dans une machine à tourner, à fraiser ou à percer.

13. Porte-outil pour outil à grande vitesse selon une ou plusieurs des revendications précédentes, dans lequel l'outil est une fraise, un foret, un outil tournant ou un outil à friction et qui est non revêtu, revêtu ou muni d'un revêtement anticorrosif.

14. Porte-outil pour outil à grande vitesse selon une ou plusieurs des revendications 2 à 13 précédentes, dans lequel la première partie (1) a, au niveau de la première extrémité après le premier diamètre (D1) le long de l'axe longitudinal, une surépaisseur supplémentaire (la) avec un septième diamètre (D7), dans lequel la surépaisseur (la) augmente tout d'abord à partir du premier diamètre (D1), puis diminue de nouveau après le septième diamètre (D7) et augmente ensuite en continu de manière conique jusqu'au deuxième diamètre (D2) au niveau de la transition avec la deuxième partie (2), dans lequel la surépaisseur supplémentaire (la) est formée de manière à conférer localement une rigidité plus élevée et ainsi un serrage suffisamment fort de la pièce.

15. Porte-outil pour outil à grande vitesse selon une ou plusieurs des revendications précédentes,
dans lequel le premier alésage (le) est formé suffisamment large et continu pour que l'outil puisse être inséré à l'intérieur sans butée, et/ou
dans lequel la tige d'outil est adaptée de telle sorte qu'elle comporte, coaxialement au premier alésage (le) au moins un canal d'écoulement centré (1f) à travers lequel un fluide peut s'écouler, et/ou
dans lequel la tige d'outil est formée de telle sorte qu'elle comporte, au niveau de la première extrémité parallèle au premier alésage (le), au moins deux canaux d'écoulement (1f) qui sont agencés symétriquement tout autour du premier alésage (le) de sorte que le porte-outil pour outil à grande vitesse reste équilibré, dans lequel les canaux d'écoulement (1f) sont formés de sorte qu'un fluide peut s'écouler à travers ceux-ci, et/ou
dans lequel la tige d'outil est formée de sorte qu'elle comporte, au niveau de la première extrémité parallèle au premier alésage (le), au moins deux canaux d'écoulement (1f) qui sont agencés symétriquement tout autour du premier alésage (le) et coupent le premier alésage (le), de sorte que des nervures d'appui sont formées à travers des parties non coupées du premier alésage (le) pour maintenir et serrer l'outil, dans lequel les au moins deux canaux d'écoulement au niveau de la première extrémité sont ouverts vers l'outil afin de permettre l'écoulement d'un fluide à travers,
dans lequel le fluide est un gaz, de l'air, de la vapeur, un liquide, un liquide de refroidissement ou un mélange de ceux-ci.
